# FASCICULE DE BREVET EUROPEEN

(11) **EP 2 082 282 B1**
(45) Date de publication et mention de la délivrance du brevet: **08.06.2011**
(21) Numéro de dépôt: 07805018.4
(22) Date de dépôt: 01.10.2007
(51) Int. Cl.: G02C 5/22

(54) **ELEMENT DE CHARNIERE ELASTIQUE A GRANDE AMPLITUDE POUR MONTURE DE LUNETTES**
ELASTISCHES SCHWENKGLIED MIT GROSSER AMPLITUDE FÜR BRILLENRAHMEN
ELASTIC HINGE MEMBER HAVING A LARGE AMPLITUDE FOR SPECTACLES RIMS

(30) Priorité: 24.10.2006 FR 0609302
(43) Date de publication de la demande: 29.07.2009
(73) Titulaire: COMOTEC, 39400 Morez (FR)
(72) Inventeur: MEDANA, Guido, 31049 Valdobbiadene (IT)
(74) Mandataire: Faggioni, Carlo Maria
(86) Numéro de dépôt international: PCT/IB2007/002918
(87) Numéro de publication internationale: WO 2008/050189

(56) Documents cités:
- EP-A1- 0 632 306
- WO-A-97/32234
- WO-A-2004/097500
- WO-A-2005/121873

## Description

La présente invention concerne le domaine de la lunetterie et des charnières pour monture de lunettes, et concerne notamment un élément de charnière élastique pour monture de lunettes du type représenté sur les figures 1A ou 2 de la demande WO2005/121873 au nom de la demanderesse.

Un tel élément de charnière comprend une coulisse agencée dans un logement et un ressort de rappel de la coulisse. La coulisse comprend une partie guidée coopérant avec une zone de guidage du logement et une extrémité formant un charnon s'étendant à l'extérieur du logement. Le ressort travaille en compression entre une butée arrière solidaire de la coulisse et une butée avant.

L'assemblage de l'élément de charnière est effectué en usine avant sa fixation sur la monture. Une fois cet assemblage effectué, la coulisse ne présente plus qu'une course réduite, rendant peu aisé le montage ou le démontage de la charnière, notamment son montage car il faut simultanément tirer sur la coulisse à l'encontre de la force de rappel exercée par le ressort et fixer le charnon à un tenon de monture au moyen d'un axe de charnière .

Le document WO97/32234 montre un élément de charnière élastique où la branche peut être detachée de la charnière par une action de traction et pivotement effectuée sur le charnon.

La présente invention vise à faciliter le montage ou le démontage d'une branche de monture de lunettes et vise notamment un élément de charnière élastique permettant de faciliter ces opérations.

A cet effet, l'invention se base sur l'idée simple mais non moins inventive de prévoir un élément de charnière comportant un ressort ayant une compressibilité suffisante pour permettre de sortir entièrement la partie guidée de la coulisse de sa zone de guidage, puis d'imprimer un mouvement de rotation à la coulisse de manière que celle-ci reste bloquée dans cette position. Il est alors aisé de conduire les opérations de montage ou de démontage de la charnière. Une autre idée optionnelle de l'invention est de conférer une forme de crochet au charnon, afin de faciliter plus encore les opérations de montage et de démontage.

Plus particulièrement, la présente invention prévoit un élément de charnière élastique pour monture de lunettes, comprenant un logement longitudinal comportant une zone de guidage, une coulisse agencée dans le logement selon un axe de translation longitudinal, la coulisse comprenant une partie arrière présentant une extrémité agencée dans le logement, une partie guidée coopérant avec la zone de guidage et un charnon s'étendant à l'extérieur du logement, et un ressort de rappel de la coulisse monté entre une butée arrière et une butée avant, dans lequel le ressort présente une compressibilité suffisante pour permettre à la partie guidée de la coulisse de sortir de la zone de guidage, la coulisse pouvant pivoter autour de son axe longitudinal lorsque la partie guidée est sortie de la zone de guidage, de manière à amener la coulisse dans une position "sortie-bloquée" facilitant une opération d'assemblage ou une opération de désassemblage du charnon avec un tenon.

Selon un mode de réalisation, le ressort dans l'état de compression maximale présente une longueur inférieure ou sensiblement égale à la distance s'étendant entre la butée arrière et la butée avant lorsque la partie guidée de la coulisse débouche en dehors de la zone de guidage.

Selon un mode de réalisation, le charnon est en forme de crochet.

Selon un mode de réalisation, 4. le logement longitudinal est pratiqué dans un boîtier destiné à être fixé sur une branche de monture de lunettes.

Selon un mode de réalisation, la coulisse est logée dans un boîtier qui comporte deux extensions latérales qui masquent le charron.

Selon un mode de réalisation, la butée arrière du ressort est agencée à l'extrémité de la partie arrière de la coulisse.

Selon un mode de réalisation, la coulisse comporte une forme spécifique de sa partie guidée ou comporte un moyen de blocage spécifique, de manière à rester bloquée dans une position "sortie-bloquée" après avoir été sortie de la zone de guidage et pivotée autour de son axe longitudinal.

Un mode de réalisation de l'invention concerne également une charnière de monture de lunettes comprenant un élément de charnière selon l'invention, un tenon et un axe de charnière reliant l'élément de charnière au tenon.

Selon un mode de réalisation, la charnière présente une position de surouverture dans laquelle le tenon et le charnon coopèrent en empêchant la coulisse de sortir plus avant de la zone de guidage.

Selon un mode de réalisation, l'élément de charnière comporte deux joues latérales qui cachent une zone de charnière où l'axe relie l'élément de charnière au tenon.

Un mode de réalisation de l'invention concerne également une branche de lunette comprenant un élément de charnière selon l'invention, le logement longitudinal étant pratiqué dans un boîtier solidaire de la branche.

Un mode de réalisation de l'invention concerne également une monture de lunettes comprenant un cadre, une branche de lunette comprenant un élément de charnière selon l'invention, le logement longitudinal étant pratiqué dans un boîtier solidaire de la branche, un tenon solidaire du cadre de la monture ou formé par une partie du cadre, et un axe de charnière reliant l'élément de charnière au tenon.

Un mode de réalisation de l'invention concerne également un procédé de montage ou de démontage d'une charnière de monture de lunettes comprenant un élément de charnière élastique et un tenon, l'élément de charnière comprenant un logement longitudinal comportant une zone de guidage, une coulisse agencée dans le logement selon un axe de translation longitudinal, la coulisse comprenant une partie arrière présentant une extrémité agencée dans le logement, une partie guidée coopérant avec la zone de guidage et un charnon s'étendant à l'extérieur du logement, et un ressort de rappel monté entre une butée arrière et une butée avant, le procédé comprenant des étapes consistant à conférer au ressort de rappel une compressibilité suffisante pour permettre à la partie guidée de la coulisse de sortir de la zone de guidage, amener la partie guidée en dehors de la zone de guidage, faire pivoter la coulisse autour de son axe longitudinal de manière qu'elle reste bloquée dans une position "sortie-bloquée", et assembler ou désassembler le charnon et le tenon.

Selon un mode de réalisation, le procédé comprend une étape consistant à conférer une forme déterminée à la partie guidée de la coulisse ou à équiper la coulisse d'un moyen de blocage spécifique, de manière que la coulisse reste bloquée dans une position "sortie-bloquée" après avoir été sortie de la zone de guidage et pivotée autour de son axe longitudinal.

Selon un mode de réalisation, le ressort est conformé de manière à présenter, dans l'état de compression maximale, une longueur inférieure ou sensiblement égale à la distance s'étendant entre la butée arrière et la butée avant lorsque la partie guidée de la coulisse débouche en dehors de la zone de guidage.

Selon une mode de réalisation, le procédé comprend une étape consistant à conférer au charnon une forme de crochet pour assurer son accrochage rapide sur un axe de charnière.

Selon un mode de réalisation, l'assemblage du charnon et du tenon est réalisé au moyen d'une vis formant un axe de la charnière.

Selon un mode de réalisation, le procédé comprend une étape consistant à prévoir sur le tenon et le charnon au moins une zone de coopération du tenon avec le charnon empêchant la coulisse de sortir plus avant de la zone de guidage lorsque la charnière atteint une position de surouverture.

Selon un mode de réalisation, le procédé comprend une étape consistant à équiper l'élément de charnière de deux joues latérales qui cachent une zone de charnière où l'axe relie l'élément de charnière au tenon.

Des exemples de réalisation de l'invention seront exposés plus en détail dans ce qui suit, en se référant à titre non limitatif aux figures jointes parmi lesquelles :
- les figures 1A à 1D sont des vues en coupe d'un exemple de réalisation d'une charnière selon l'invention, respectivement dans une position fermée, une position intermédiaire, une position ouverte et une position de surouverture,
- la figure 1E est une vue en coupe de la charnière lorsque la coulisse se trouve en dehors de la zone de guidage,
- la figure 1F est une vue en perspective montrant un mouvement de rotation appliqué à la coulisse,
- la figure 1G est une vue en coupe de la chaumière dans une position "sortie-bloquée",
- la figure 2A représente un exemple de réalisation d'une butée avant du ressort de rappel,
- la figure 2B représente un exemple de réalisation de la coulisse,
- les figures 3A à 3C sont des vues en perspective représentant un autre exemple de réalisation d'un élément de charnière selon l'invention, respectivement en position de repos, en position sortie, et en position "sortie-bloquée",
- la figure 3D illustre une étape d'assemblage de l'élément de charnière avec un tenon, pour former une charnière,
- les figures 3E et 3F illustrent des étapes où la charnière revient dans une position fonctionnelle, et
- les figures 4A à 4C sont des vues latérales d'une charnière comprenait encore un autre exemple de réalisation d'un élément de charnière selon l'invention, représenté respectivement en position de repos, en position sortie et en position "sortie-bloquée", et
- les figures 4D à 4F sont des vues de dessus de la charnière des figures 4A à 4C, respectivement en position ouverte, en position fermée et en position de surouverture.

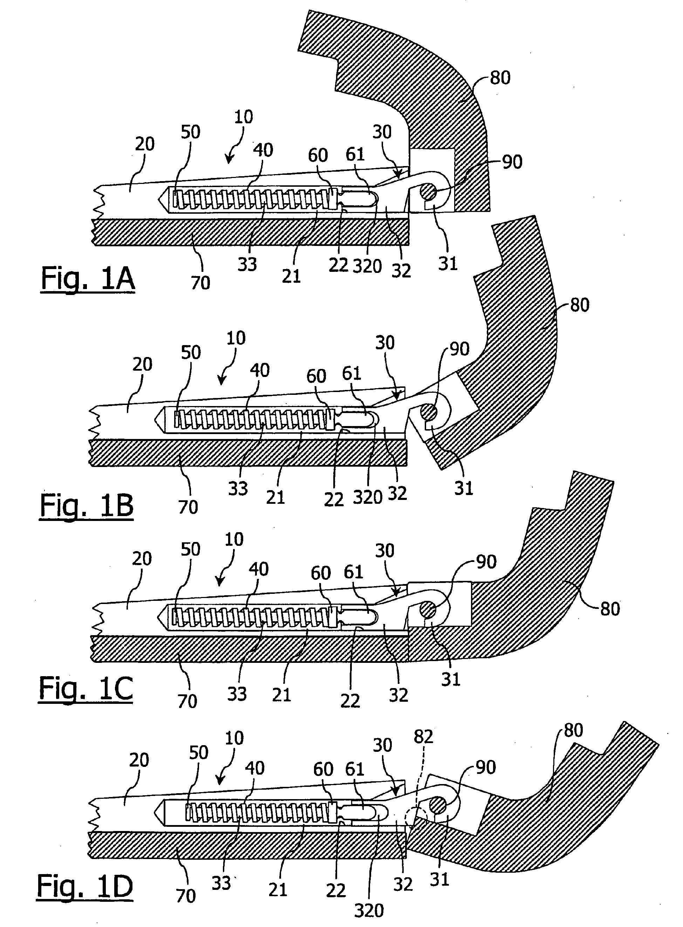

Les figures 1A à 1G représentent une charnière comprenant une élément de charnière 10 fixé sur une banche 70 et assemblé avec un tenon 80 au moyen d'un axe de charnière 90. Le tenon 80 est solidaire du cadre d'une monture de lunettes (non représenté) ou est formé par une partie du cadre de la monture. Le tenon peut également être vissé sur un verre, dans le cas d'une monture dans cadre .

L'élément de charnière 10 comprend un boîtier 20, une coulisse 30 et un ressort 40, ici à spires, pour rappeler la coulisse dans une position de repos.

Le boîtier 20 comprend un logement longitudinal 21 dont la partie avant comporte ou forme une zone de guidage 22 de section non circulaire, par exemple rectangulaire. La coulisse 30 comprend un charnon 31 s'étendant à l'extérieur du logement 21, une partie guidée 32 coopérant avec la zone de guidage 22, et une tige 33 s'étendant à l'arrière du logement 21. Le ressort 40 est monté sur la tige 33 et est pris en sandwich entre une butée arrière 50 solidaire de la tige 33 et une butée avant 60 bloquée en translation.

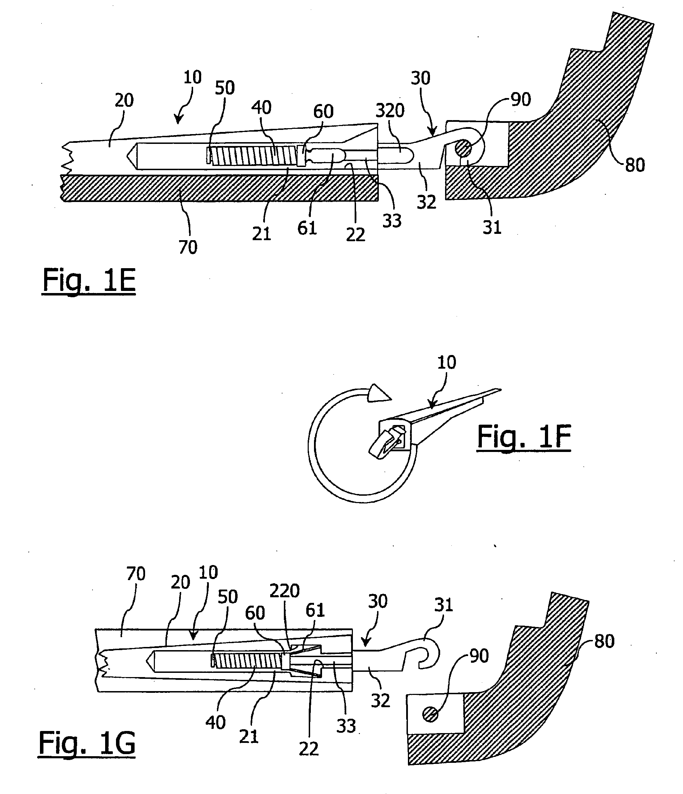

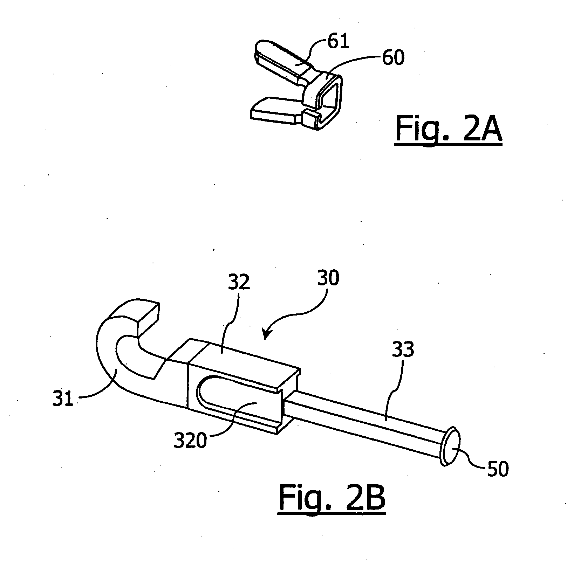

La figure 2A représente un exemple de butée avant. La butée est une sorte de bague 60 comprenant des languettes de retenue 61 s'engageant dans des cavités 220 (fig. 1G) prévues dans la zone de guidage 22 pour empêcher la bague 60 de coulisser vers l'avant du boîtier.

La figure 2B représente la coulisse 30 vue en perspective. Les flancs de gauche et de droite de la partie guidée 32 comprennent des encoches 320 (seule l'encoche de gauche étant visible) qui reçoivent les languettes de retenue 61 lors de l'insertion de la coulisse 30 et de la bague 60 dans le boîtier. Les languettes 61 se déploient ensuite dans les cavités 220 (fig. 1G) en empêchant la bague et la coulisse de ressortir du boîtier. La butée arrière 50 peut être simplement un bourrelet obtenu en frappant l'extrémité de la tige 33, comme cela apparaît sur cette figure, ou peut également être réalisée par pliage à 90° de l'extrémité de la tige 33.

L'élément de charnière 10 représenté sur les figures 1A à 1G présente deux caractéristiques :
- le charnon 31 est en forme de crochet,
- la "compressibilité" du ressort 40, c'est-à-dire sa longueur minimale lorsqu'il est dans un état de compression maximale, est suffisante pour permettre à la coulisse 30 d'atteindre une position "sortie" représentée en figure 1E, dans laquelle la partie guidée 32 de la coulisse se trouve en dehors de la zone de guidage 22.

A cet effet le ressort, s'agissant ici d'un ressort à spire, doit présenter dans l'état comprimé une longueur inférieure ou sensiblement égale à la distance s'étendant entre la butée arrière 50 et la butée avant 60 lorsque la partie guidée 32 débouche en dehors de la zone de guidage 22 (position "sortie" représentée en figure 1E).

Ces deux caractéristiques permettent de monter ou de démonter aisément la charnière, de la manière suivante :
1) on tire sur la coulisse pour amener la partie guidée 32 en dehors de la zone de guidage 22, comme représenté sur la figure 1E,
2) on fait pivoter la coulisse 30 autour de son axe longitudinal, comme représenté sur la figure 1F, par exemple d'un quart de tour si la partie guidée 32 de la coulisse est de section rectangulaire et non carrée. Après cette rotation, les côtés les plus larges de la partie guidée 32 se trouvent en face des parois les moins larges de la zone de guidage 22, empêchant ainsi la coulisse de pénétrer dans la zone de guidage. La coulisse reste bloquée dans cette position que l'on désignera position "sortie-bloquée".
3) une fois la position "sortie-bloquée" atteinte, il n'est plus nécessaire de maintenir la coulisse 30 pour monter ou démonter la charnière, comme illustré sur la figure 1G. Par ailleurs, la forme en crochet du charnon 31 permet le décrochage rapide de ce dernier de l'axe 90 ou son accrochage rapide sur l'axe 90.

Il sera noté que la vue en coupe de la figure 1G, qui correspond à la position "sortie-bloquée", représente l'élément de charnière 10 dans une plan de coupe perpendiculaire au plan de coupe des figures 1A à 1E, à l'exclusion de la coulisse 30 qui, comme le tenon 80, est représentée dans le plan de coupe des figures précédentes. Par rapport aux figures précédentes, cette représentation correspond à une rotation de l'élément de charnière par rapport à la coulisse plutôt qu'une rotation de la coulisse par rapport à l'élément de charnière. En effet la rotation considérée ici est une rotation de la coulisse relativement à l'élément de charnière et peut également consister en une rotation de l'élément de charnière par rapport à la coulisse (notamment pendant le démontage de la charnière, où il est plus facile de faire pivoter la branche sur son axe longitudinal que de faire pivoter la monture autour de l'axe longitudinal de la branche).

Par ailleurs, la charnière s'utilise comme une charnière élastique classique et présente deux positions stables, à savoir une position fermée représentée en figure 1A et une position ouverte représentée en figure 1C. La position fermée est atteinte lorsque, la branche 70 est rabattue sur le cadre de la monture de lunettes (ou sur les verres dans le cas d'une monture sans cadre).

Dans une position intermédiaire représentée en figure 1B, la coulisse 30 est tirée vers l'avant et le ressort 40 exerce une force de rappel élastique. Ainsi, la charnière présente un effet élastique lorsque l'on passe de la position fermée à la positon ouverte et vice-versa.

De préférence, la charnière peut atteindre une position de surouverture telle que représenté en figure 1D. Dans cette position, une précaution doit être prise pour empêcher la coulisse 30 de sortir entièrement de la zone de guidage 22 (i.e. d'atteindre la position "sortie"). Cette précaution consiste par exemple à prévoir une butée. Dans l'exemple de réalisation représenté en figure 1D, un bord du tenon 80 vient s'appuyer sur une paroi du charnon 90 (zone 82 repérée par un cercle en traits pointillés) lorsqu'un angle maximal de surouverture est atteint. Cela empêche la coulisse 30 de sortir de la zone de guidage 22 et la charnière se trouve "auto-bloquée".

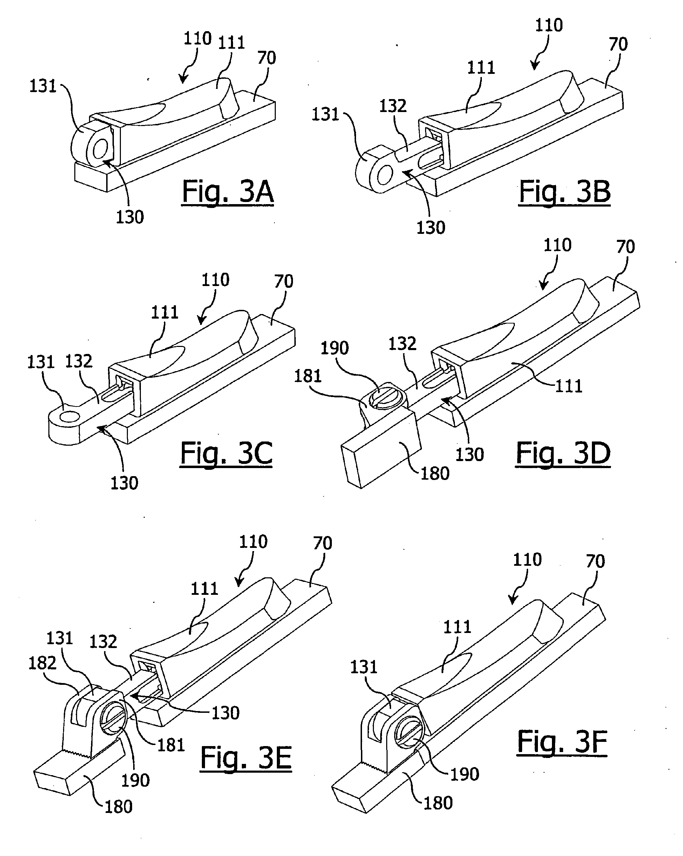

Les figures 3A à 3F illustrent une charnière comprenant un élément de charnière 110 . L'élément de charnière 110 comprend une coulisse 130 dont l'extrémité forme un charnon 131 de type classique, comportant un oeil de charnière (perçage) au lieu d'être en forme de crochet. Comme précédemment, la coulisse est agencée dans une boîtier 111 comprenant un logement longitudinal dont la partie avant comporte ou forme une zone de guidage de la coulisse.

Sur la figure 3A, le boîtier 111 de l'élément de charnière est fixé sur une branche 70 (représentée partiellement et schématiquement) et la coulisse 130 est maintenue en position de repos par le ressort.

Sur la figure 3B, on tire sur la coulisse jusqu'à ce que la partie guidée 132 se trouve en dehors de la zone de guidage (position "sortie").

Sur la figure 3C, on fait tourner la coulisse sur elle-même d'un quart de tour, de sorte que la partie guidée 132 s'appuie sur la face avant du boîtier 111 et ne peut plus pénétrer dans la zone de guidage (position "sortie-bloquée"), la partie guidée 132 étant de forme rectangulaire .

Sur la figure 3D, on procède à l'assemblage du charnon avec un tenon 180, au moyen d'une vis 190 formant l'axe de rotation de la charnière. La vis est tenue par deux flasques parallèles 181, 182 du tenon 180, et s'étendent de chaque côté du charnon 131 et comportent des orifices formant des paliers. L'étape de vissage est facilitée par le fait que la position "sortie-bloquée" permet d'aligner l'orifice du charnon avec celui du tenon avant l'insertion et le vissage de l'axe.

Sur la figure 3E, on fait pivoter la coulisse 130 d'un quart de tour en sens inverse de manière à réaligner la partie guidée 132 avec l'orifice de la zone de guidage. Sur la figure 3F, la coulisse est rentrée dans la zone de guidage et la charnière a retrouvé sa position normale sous l'effet de la force de rappel du ressort.

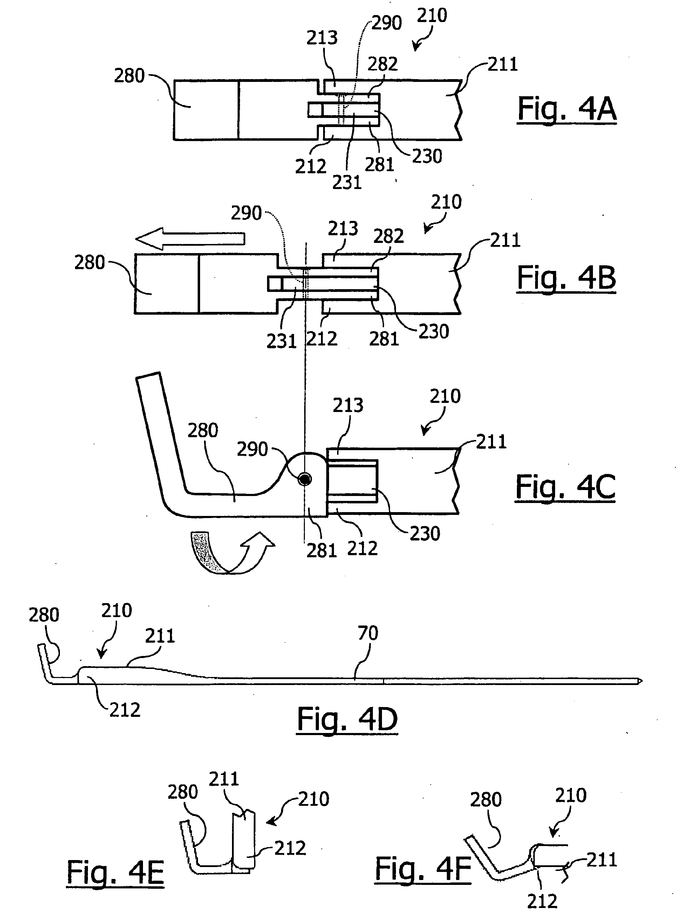

Les figures 4A à 4F montrent encore une autre variante de réalisation d'une charnière selon l'invention, comprenant un élément de charnière 210, un tenon 280 et une vis 290 formant un axe de charnière reliant l'élément de charnière 210 au tenon 280. Comme précédemment, l'élément de charnière 210 comprend un boîtier 211, qui est solidaire ici d'une branche 70 (représentée sur la figure 4D).

La charnière est vue de coté sur les figures 4A à 4C. Le boîtier 211 comprend comme précédemment un logement longitudinal dont la partie avant comporte ou forme une zone de guidage d'une coulisse 230. La coulisse 230 comprend une partie guidée coopérant avec la zone de guidage et une extrémité formant un charnon 231 comprenant un oeil de charnière qui est traversé par la vis 290. Comme précédemment, le tenon 280 comprend deux flasques parallèles 281, 282 qui s'étendent de chaque côté du charnon 231, et reçoivent les extrémités de la vis 290.

Dans ce mode de réalisation, la largeur du tenon 280 dans la zone de charnière, c'est-à-dire la distance entre les deux faces externes des flasques 281, 282, est inférieure à la largeur du boîtier 211. Le boîtier 211 comprend deux extensions latérales 212, 213 formant des joues qui s'étendent de chaque côté de la charnière, la joue 212 s'étendant parallèlement au flasque 281 et la joue 213 s'étendant parallèlement au flasque 282.

Ainsi, les joues 212, 213 cachent la zone de charnière, généralement peu esthétique, notamment les extrémités de la vis 290 et en particulier la tête de vis. Les joues 212, 213 peuvent également procurer un effet technique en maintenant latéralement les flaques 281, 282 et limitant ainsi le jeu latéral de la charnière, lequel est généralement "amplifié" à l'extrémité de la branche.

Cette caractéristique est rendue possible par le fait que, conformément à la caractéristique principale de l'invention, la coulisse 230 peut sortir de la zone de guidage, et le charnon peut être amené dans une position où il n'est plus caché par les joues 212, 213, de sorte que l'élément de charnière 210 et le tenon 280 peuvent être aisément assemblés ou désassemblés.

L'opération de démontage de la charnière est illustrée sur les figures 4B, 4C. Sur la figure 4B, le charnon 231 est amené en dehors de la zone cachée par les joues 212, 213 en appliquant un mouvement d'éloignement du boîtier 211 relativement au tenon 280 (par exemple en tirant sur la branche) . On applique ensuite un mouvement de rotation du chaman relativement au boîtier (ou réciproquement du boîtier relativement au charnon, par exemple en faisant pivoter la branche), de sorte que la charnière se trouve dans la position "sortie-bloquée" . En effet la coulisse 230 ne peut plus revenir dans le boîtier 211 du fait que les flasques 281, 282 se trouvent dans une position non parallèle aux joues 212, 213 et sont donc bloqués par celles-ci.

L'effet esthétique de cette caractéristique technique apparaît clairement sur les figures 4D à 4F, qui représentent la charnière vue de dessus. La figure 4D représente la charnière en position ouverte (branche dépliée), la figure 4E représente la charnière en position fermée (branche rabattue sur le cadre de la monture) et la figure 4F représente la charnière en position de surouverture (branche tirée au-delà de la position dépliée normale). Quelle que soit la position de la branche, la zone de charnière reste invisible, lorsque la monture de lunettes est observée dans une direction sensiblement parallèle à l'axe de charnière (soit de dessus ou de dessous).

Ainsi, il sera noté que le blocage de la coulisse dans la position "sortie-bloquée" peut être assuré par la forme particulière des flasques du tenon relativement à la forme du boîtier et/ou par une forme spécifique de la partie guidée de la coulisse (section non circulaire) relativement à la forme de la zone de guidage.

Si le blocage de la coulisse est uniquement assuré par un blocage des flasques du tenon contre le boîtier, la coulisse pourrait revenir dans son logement de guidage après démontage du tenon.

De façon générale, diverses formes de coulisse peuvent permettent d'obtenir le blocage de la coulisse en position "sortie-bloquée", par exemple une section de forme carrée. Dans ce cas, la position "sortie-bloquée" nécessite une rotation inférieure ou supérieure à 1/4 de tour, afin que la coulisse reste en travers de l'orifice de la zone de guidage et ne pénètre pas dans celle-ci.

Des moyens spécifiques permettant de maintenir la coulisse en position sortie-bloquée peuvent également être prévus. Il peut s'agir par exemple d'un ergot latéral solidaire de la coulisse, formant une excroissance de la coulisse s'étendant dans une direction perpendiculaire à l'axe de translation de la coulisse.

Dans ce cas, une rainure pour recevoir l'ergot est pratiquée dans le logement, de manière que l'ergot glisse dans la rainure lorsque la coulisse est mue en translation. Une fois la coulisse sortie de la zone de guidage, et après lui avoir appliqué un mouvement de rotation, l'ergot maintient la coulisse dans la position sortie-bloquée en venant buter contre une paroi de retenue, par exemple la face avant du boîtier.

Dans ce cas, la forme générale de la partie guidée de la coulisse n'intervient pas dans la fonction de blocage et la partie guidée peut être de forme générale cylindrique (soit une section circulaire) puisque c'est l'ergot qui assure la fonction de blocage.

Il apparaîtra clairement à l'homme de l'art qu'une charnière selon l'invention est susceptible de divers autres modes de réalisation, notamment en ce qui concerne la structure interne de l'élément de charnière et ses éléments constitutifs (ressort, butées avant et arrière, forme de la coulisse).

Par ailleurs, comme cela apparaît sur la figure 4D, l'élément de charnière peut être entièrement intégré dans une branche au lieu d'être fixé sur la branche, comme cela apparaît sur les figures 3A à 3F. L'élément de charnière peut également être solidaire de la monture et le tenon être solidaire de la branche.

## Revendications

1. Élément de charnière élastique (10, 110, 210) pour monture de lunettes, comprenant :
- un logement longitudinal (21) comportant une zone de guidage (22),
- une coulisse (30, 130, 230) agencée dans le logement selon un axe de translation longitudinal, la coulisse comprenant une partie arrière (33) présentant une extrémité (50) agencée dans le logement (21), une partie guidée (32, 132) coopérant avec la zone de guidage et un charnon (31, 131, 231) s'étendant à l'extérieur du logement, et.
- un ressort (40) de rappel de la coulisse, monté entre une butée arrière (50) et une butée avant (60),
le ressort (40) présentant une compressibilité suffisante pour permettre à la partie guidée (32, 132) de la coulisse de sortir de la zone de guidage (22),
de manière que la coulisse (30, 130, 230) puisse pivoter autour de son axe longitudinal lorsque la partie guidée (32, 132) est sortie de la zone de guidage,
**caractérisé en ce que** le pivotement améne la coulisse dans une position "sortie-bloquée" facilitant une opération d'assemblage ou une opération de désassemblage du charnon avec un tenon (80, 180, 280).

2. Elément de charnière selon la revendication 1, dans lequel le ressort (40) dans l'état de compression maximale présente une longueur inférieure ou sensiblement égale à la distance s'étendant entre la butée arrière (50) et la butée avant (60) lorsque la partie guidée (32, 132) de la coulisse débouche en dehors de la zone de guidage.

3. Elément de charnière (10) selon l'une des revendications 1 et 2, dans laquelle le charnon (31) est en forme de crochet.

4. Élément de charnière (10, 110 , 210) selon l'une des revendications 1 à 3, dans lequel le logement longitudinal (21) est pratiqué dans un boîtier (20, 111, 211) destiné à être fixé sur une branche de monture de lunettes.

5. Élément de charnière (210) selon l'une des revendications 1 à 4, dans lequel la coulisse est logée dans un boîtier (211) qui comporte deux extensions latérales (212, 213) qui masquent le charnon (231).

6. Élément de charnière selon l'une des revendications 1 à 4, dans lequel la butée arrière (50) du ressort est agencée à l'extrémité de la partie arrière (33) de la coulisse (30).

7. Élément de charnière selon l'une des revendications 1 à 6, dans lequel la coulisse (30, 130, 230) comporte une forme spécifique de sa partie guidée ou comporte un moyen de blocage spécifique, de manière à rester bloquée dans une position "sortie-bloquée" après avoir été sortie de la zone de guidage et pivotée autour de son axe longitudinal.

8. Charnière de monture de lunettes comprenant :
- un élément de charnière (10, 110, 210) selon l'une des revendications 1 à 7,
- un tenon (80, 180, 280), et
- un axe (90, 190, 290) de charnière reliant l'élément de charnière (10, 110, 210) au tenon (80, 180, 280).

9. Charnière selon la revendication 8, présentant une position de surouverture dans laquelle le tenon (80) et le charnon (31) coopèrent (82) en empêchant la coulisse de sortir plus avant de la zone de guidage.

10. Charnière selon l'une des revendications 8 et 9, dans laquelle l'élément de charnière (210) comporte deux joues latérales (212, 213) qui cachent une zone de charnière où l'axe (290) relie l'élément de charnière (210) au tenon (280).

11. Branche de lunette (70) comprenant un élément de charnière (10, 110, 210) selon l'une des revendications 1 à 7, le logement longitudinal (21) étant pratiqué dans un boîtier (20, 111, 211) solidaire de la branche.

12. Monture de lunettes comprenant :
- un cadre,
- une branche de lunettes selon la revendication 11,
- un tenon (80, 180, 280) solidaire du cadre de la monture ou formé par une partie du cadre, et
- un axe (90, 190, 290) de charnière reliant l'élément de charnière (10, 110, 210) au tenon (80, 180, 280).

13. Procédé de montage ou de démontage d'une charnière de monture de lunettes comprenant un élément de charnière élastique (10, 110, 210) et un tenon (80, 180, 280), l'élément de charnière comprenant :
- une logement longitudinal (21) comportant une zone de guidage (22),
- une coulisse (30, 130, 230) agencée dans le logement (21) selon un axe de translation longitudinal, la coulisse comprenant une partie arrière (33) présentant une extrémité (50) agencée dans le logement (21), une partie guidée (32, 132) coopérant avec la zone de guidage (22) et une charnon (31, 131, 231) s'étendant à l'extérieur du logement, et
- un ressort de rappel (40) monté entre une butée arrière (50) et une butée avant (60),
le procédé comprenant des étapes consistant à :
- conférer au ressort de rappel (40) une compressibilité suffisante pour permettre à la partie guidée (32, 132) de la coulisse (30, 130, 230) de sortir de la zone de guidage,
- amener la partie guidée (32, 132) en dehors de la zone de guidage (22),
- faire pivoter la coulisse (30, 130, 230) autour de son axe longitudinal de manière qu'elle reste bloquée dans une position "sortie-bloquée", et
- assembler ou désassembler le charnon (31, 131) et le tenon (80, 180, 280).

14. Procédé selon la revendication 13, comprenant une étape consistant à conférer une forme déterminée à la partie guidée de la coulisse (30, 130, 230) ou à équiper la coulisse d'un moyen de blocage spécifique, de manière que la coulisse reste bloquée dans une position "sortie-bloquée" après avoir été sortie de la zone de guidage et pivotée autour de son-axe longitudinal.

15. Procédé selon l'une des revendications 13 et 14, dans lequel le ressort (40) est conformé de manière à présenter, dans l'état de compression maximale, une longueur inférieure ou sensiblement égale à la distance s'étendant entre la butée arrière (50) et la butée avant (60) lorsque la partie guidée (32, 132) de la coulisse débouche en dehors de la zone de guidage.

16. Procédé selon l'une des revendications 13 à 15, comprenant une étape consistant à conférer au charnon (31) une forme de crochet pour assurer son accrochage rapide sur un axe (90) de charnière.

17. Procédé selon l'une des revendications 13 à 16, dans lequel l'assemblage du charnon (131, 231) et du tenon (180, 280) est réalisé au moyen d'une vis (190, 290) formant un axe de la charnière.

18. Procédé selon l'une des revendications 13 à 17, comprenant une étape consistant à prévoir sur le tenon (80) et le charnon (31) au moins une zone de coopération (82) du tenon avec le charnon empêchant la coulisse de sortir plus avant de la zone de guidage lorsque la charnière atteint une position de surouverture.

19. Procédé selon l'une des revendications 13 à 18, comprenant une étape consistant à équiper l'élément de charnière (210) de deux joues latérales (212, 213) qui cachent une zone de charnière où l'axe (290) relie l'élément de charnière (210) au tenon (280).

## Claims

1. Elastic hinge member (10, 110, 210) for a spectacle frame, comprising:
- a longitudinal housing (21) comprising a guidance zone (22),
- a slide (30, 130, 230) designed in the housing according to an axis of longitudinal translation, the slide comprising a rear part (33) which has an end (50) designed in the housing (21), a guided part (32, 132) which cooperates with the guidance zone and a knuckle (31, 131, 231) which extends to the outside of the housing, and
- a return spring (40) for the slide, mounted between a rear limit stop (50) and a front limit stop (60),
- the spring (40) having adequate compressibility in order to allow the guided part (32, 132) of the slide to extend from the guidance zone (22),
- such that the slide (30, 130, 230) can pivot about the longitudinal axis thereof when the guided part (32, 132) is extended from the guidance zone, **characterised in that** the pivoting brings the slide into an "extended-locked" position which facilitates an assembly operation or a dismantling operation of the knuckle with an end-piece (80, 180, 280).

2. Hinge member according to claim 1, in which the spring (40), in the state of maximum compression, has a length which is less than or substantially equal to the distance which extends between the rear limit stop (50) and the front limit stop (60) when the guided part (32, 132) of the slide emerges outside the guidance zone.

3. Hinge element (10) according to one of the claims 1 and 2, in which the knuckle (31) is in the form of a hook.

4. Hinge element (10, 110, 210) according to one of the claims 1 to 3, in which the longitudinal housing (21) is constructed in a case (20, 111, 211) which is intended to be fixed on a leg of the spectacle frame.

5. Hinge element (210) according to one of the claims 1 to 4, in which the slide is accommodated in a case (211) which comprises two lateral extensions (212, 213) which hide the knuckle (231).

6. Hinge element according to one of the claims 1 to 4, in which the rear limit stop (50) of the spring is designed at the end of the rear part (33) of the slide (30).

7. Hinge element according to one of the claims 1 to 6, in which the slide (30, 130, 230) comprises a specific form of the guide part thereof or comprises a specific locking means, so as to remain locked in an "extended-locked" position after having been extended from the guidance zone and pivoted about the longitudinal axis thereof.

8. Hinge for a spectacle frame comprising:
- a hinge element (10, 110, 210) according to one of the claims 1 to 7,
- an end-piece (80, 180, 280), and
- a hinge axis (90, 190, 290) connecting the hinge element (10, 110, 210) to the end-piece (80, 180, 280).

9. Hinge according to claim 8, having an over-opening position in which the end-piece (80) and the knuckle (31) cooperate (82) by preventing the slide extending further forward from the guidance zone.

10. Hinge according to one of the claims 8 and 9, in which the hinge element (210) comprises two lateral cheeks (212, 213) which conceal a zone of the hinge where the axis (290) connects the hinge element (210) to the end-piece (280).

11. Spectacle leg (70) comprising a hinge element (10, 110, 210) according to one of the claims 1 to 7, the longitudinal housing (21) being constructed in a case (20, 11, 211) which is integral with the leg.

12. Spectacle frame comprising:
- a mount,
- a spectacle leg according to claim 11,
- an end-piece (80, 180, 280) which is integral with the mount of the frame or formed by a part of the mount, and
- an axis (90, 190, 290) of the hinge connecting the hinge element (10, 110, 210) to the end-piece (80, 180, 280).

13. Method for assembling or dismantling a spectacle frame hinge comprising an elastic hinge element (10, 110, 210) and an end-piece (80, 180, 280), the hinge element comprising:
- a longitudinal housing (21) comprising a guidance zone (22),
- a slide (30, 130, 230) designed in the housing (21) according to an axis of longitudinal translation, the slide comprising a rear part (33) which has an end (50) designed in the housing (21), a guided part (32, 132) which cooperates with the guidance zone (22) and a knuckle (31, 131, 231) which extends to the outside of the housing, and
- a return spring (40), mounted between a rear limit stop (50) and a front limit stop (60),
the method comprising the steps consisting of:
- providing the return spring (40) with adequate compressibility in order to allow the guided part (32, 132) of the slide (30, 130, 230) to extend from the guidance zone,
- bringing the guided part (32, 132) outside the guidance zone (22),
- making the slide (30, 130, 230) pivot about the longitudinal axis thereof such that it remains locked in an "extended-locked" position, and
- assembling or dismantling the knuckle (31, 131) and the end-piece (80, 180, 280).

14. Method according to claim 13, comprising a step consisting of providing the guided part of the slide (30, 130, 230) with a specific form or equipping the slide with a specific locking means such that the slide remains locked in an "extended-locked" position after having been extended from the guidance zone and pivoted about the longitudinal axis thereof.

15. Method according to one of the claims 13 and 14, in which the spring (40) is formed so as to have, in the state of maximum compression, a length which is less than or substantially equal to the distance which extends between the rear limit stop (50) and the front limit stop (60) when the guided part (32, 132) of the slide emerges outside the guidance zone.

16. Method according to one of the claims 13 to 15, comprising a step consisting of providing the knuckle (31) with the form of a hook in order to ensures rapid hooking thereof onto an axis (90) of the hinge.

17. Method according to one of the claims 13 to 16, in which the assembly of the knuckle (131, 231) and of the end-piece (180, 280) is produced by means of a screw (190, 290) forming an axis of the hinge.

18. Method according to one of the claims 13 to 17, comprising a step consisting of providing, on the end-piece (80) and the knuckle (31), at least one cooperation zone (82) of the end-piece with the knuckle which prevents the slide extending further forward from the guidance zone when the hinge reaches an over-opening position.

19. Method according to one of the claims 13 to 18, comprising a step consisting of equipping the hinge element (210) with two lateral cheeks (212, 213) which hide a zone of the hinge where the axis (290) connects the hinge element (210) to the end-piece (280).

## Patentansprüche

1. Elastisches Gelenk (10, 110, 210) für ein Brillengestell, umfassend:
- eine Längsaufnahme (21) mit einem Führungsbereich (22),
- eine Gleitführung (30, 130, 230), die in der Aufnahme entlang einer longitudinalen Translationsachse angeordnet ist und ein Hinterteil (33) mit einem Ende (50), das in der Aufnahme (21) angeordnet ist, ein Führungsteil (32, 132), das mit dem Führungsbereich zusammenarbeitet, und ein Scharnierteil (31, 131, 231) umfasst, das sich zur Außenseite der Aufnahme erstreckt, und
- eine Feder (40) zum Zurückstellen der Gleitführung, welche Feder zwischen einem Hinteranschlag (50) und einem Vorderanschlag (60) angebracht ist,
wobei die Feder (40) eine ausreichende Kompressibilität aufweist, so dass das Führungsteil (32, 132) der Gleitführung aus dem Führungsbereich (22) verlassen können,
so dass die Gleitführung (30, 130, 230) um deren Längsachse schwenken kann, wenn das Führungsteil (32, 132) den Führungsbereich verlassen hat,
**dadurch gekennzeichnet, dass** die Schwenkbewegung die Gleitführung in einer Position "blockierter Ausgang" hält, was einen Montagevorgang oder einen Demontagevorgang des Scharnierteils bezüglich eines Zapfens (80, 180, 280) ermöglicht.

2. Gelenkbauteil nach Anspruch 1, bei dem die Feder (40) in dem maximalen Kompressionszustand eine Länge aufweist, die kleiner oder im Wesentlichen gleich dem Abstand zwischen dem Hinteranschlag (50) und dem Vorderanschlag (60) ist, wenn der Führungsteil (32, 132) der Gleitführung nach außen aus dem Führungsbereich vorsteht.

3. Gelenkteil (10) nach einem der Ansprüche 1 und 2, bei dem das Scharnierteil (31) die Form eines Hakens aufweist.

4. Gelenkteil (10, 110, 210) nach einem der Ansprüche 1 bis 3, bei dem die Längsaufnahme (21) in einem Gehäuse (20, 111, 211) ausgebildet ist, das an einem Arm eines Brillengestells befestigt werden soll.

5. Gelenkteil nach einem der Ansprüche 1 bis 4, bei dem die Gleitführung in einem Gehäuse (211) untergebracht ist, das zwei seitliche Verlängerungen (212, 213) umfasst, die das Scharnierteil (231) überdecken.

6. Gelenkteil nach einem der Ansprüche 1 bis 4, bei dem der Hinterschlag (50) der Feder an dem Ende des Hinterteils (33) der Gleitführung (30) angeordnet ist.

7. Gelenkteil nach einem der Ansprüche 1 bis 6, bei dem die Gleitführung (30, 130, 230) eine führungsteilspezifische Gestalt oder eine spezifische Sperreinrichtung umfasst, so dass sie in einer Position "blockierter Ausgang" verbleibt, nachdem sie den Führungsbereich verlassen hat und um deren Längsachse geschwenkt ist.

8. Gelenk für ein Brillengestell, umfassend:
- ein Gelenkteil (10, 110, 210) gemäß einem der Ansprüche 1 bis 7,
- einen Zapfen (80, 180, 280), und
- eine Gelenkachse (90, 190, 290), die das Gelenkteil (10, 110, 210) mit dem Zapfen (80, 180, 280) verbindet.

9. Gelenk nach Anspruch 8, das eine Überöffnungsposition aufweist, in welcher der Zapfen (80) und das Scharnierteil (31) zusammenwirken (82), um die Gleitführung daran zu hindern, nicht mehr den Führungsbereich zu verlassen.

10. Gelenk nach Anspruch 8 und 9, bei dem das Gelenkteil (210) zwei Seitenwandteile (212, 213) umfasst, die einen Gelenkbereich bedecken, an dem die Achse (290) das Gelenkteil (210) mit dem Zapfen (280) verbindet.

11. Brillenarm (70) mit einem Gelenkteil (10, 110, 210) gemäß einem der Ansprüche 1 bis 7, wobei die Längsaufnahme (21) in einem Gehäuse (20, 111, 211) ausgebildet ist, das mit dem Arm fest verbunden ist.

12. Brillengestell, umfassend:
- einen Rahmen,
- einen Brillenarm gemäß dem Anspruch 11,
- einen Zapfen (80, 180, 280), der mit dem Rahmen des Gestells fest verbunden ist oder durch einen Rahmenabschnitt gebildet ist, und
- eine Gelenkachse (90, 190, 290), die das Gelenkteil (10, 110, 210) mit dem Zapfen (80, 180, 280) verbindet.

13. Verfahren zum Montieren oder Demontieren eines Gelenks für ein Brillengestell, umfassend ein elastisches Gelenkteil (10, 110, 210) und einen Zapfen (80, 180, 280), wobei das Gelenkteil aufweist:
- eine Längsaufnahme (21) mit einem Führungsbereich (22),
- eine Gleitführung (30, 130, 230), die in der Aufnahme (21) gemäß einer longitudinalen Translationsachse aufgenommen ist, wobei die Kulissenbahn ein Hinterteil (33) umfasst, das ein Ende (50) aufweist, das in der Aufnahme (21) angeordnet ist, wobei ein Führungsteil (32, 132) mit dem Führungsbereich (22) zusammenwirkt und sich ein Scharnierteil (31, 131, 231) zur Außenseite von der Aufnahme erstreckt, und
- eine Rückstellfeder (40), die zwischen einem Hinteranschlag (50) und einem Vorderanschlag (60) angeordnet ist,
wobei bei dem Verfahren:
- der Rückstellfeder (40) eine Kompressibilität verliehen wird, die dazu ausreicht, dem Führungsteil (32, 132) der Gleitführung (30, 130, 230) es zu ermöglichen, den Führungsbereich zu verlassen,
- das Führungsteil (32, 132) außerhalb des Führungsbereichs gehalten wird,
- die Gleitführung (30, 130, 230) um deren Längsachse derart geschwenkt wird, dass sie in einer Position "blockierter Ausgang" gesperrt bleibt, und
- das Scharnierteil (31, 131) und der Zapfen (80, 180, 280) zusammengebaut oder demontiert werden.

14. Verfahren nach Anspruch 13, bei dem für das Führungsteil der Gleitführung (30, 130, 230) eine bestimmte Form verliehen wird oder die Gleitführung mit einer Sperreinrichtung ausgestattet wird, so dass die Gleitführung in einer Position "blockierter Aufgang" gesperrt bleibt, nachdem sie den Führungsbereich verlassen hat und um deren Längsachse geschwenkt ist.

15. Verfahren nach Anspruch 13 und 14, bei dem die Feder (40) derart ausgelegt ist, dass sie in einem maximalen Kompressionszustand eine Länge aufweist, die kleiner oder im wesentlichen gleich desjenigen Abstands ist, der sich zwischen dem Hinteranschlag (50) und dem Vorderanschlag (60) erstreckt, wenn das Führungsteil (31, 132) der Gleitführung aus dem Führungsbereich heraus vorsteht.

16. Verfahren nach einem der Ansprüche 13 bis 1.5, bei dem dem Gelenkteil (31) eine Hakenform verliehen wird, um dessen schnelle Ankopplung an einer Gelenkachse (90) sicherzustellen.

17. Verfahren nach einem der Ansprüche 13 bis 16, bei dem der Zusammenbau des Scharnierteils (131, 231) oder des Zapfens (180, 280) mittels einer Schraube (190, 290) realisiert ist, die die Gelenkachse bildet.

18. Verfahren nach einem der Ansprüche 13 bis 17, bei dem an dem Zapfen (80) und dem Scharnierteil (31) wenigstens ein Bereich zum Zusammenwirken (82) des Zapfens mit dem Scharnierteil vorgesehen wird, um die Gleitführung daran zu hindern, nicht mehr vor dem Führungsbereich herauszutreten, wenn das Gelenk eine Überöffnungsposition erreicht.

19. Verfahren nach einem der Ansprüche 13 bis 18, bei dem das Gelenkteil (210) mit zwei Seitenwandteilen (212, 213) ausgestattet wird, die einen Gelenkbereich bedecken, an dem die Achse (290) das Gelenkteil (210) mit dem Zapfen (280) verbindet.
